Europäisches Patentamt

(19) European Patent Office

Office européen des brevets

(11) **EP 0 850 811 A1**

## (12) EUROPEAN PATENT APPLICATION
published in accordance with Art. 158(3) EPC

(43) Date of publication:
01.07.1998 Bulletin 1998/27

(21) Application number: 95941253.7

(22) Date of filing: 14.09.1995

(51) Int. Cl.$^6$: **B60S 1/00**

(86) International application number:
PCT/RU95/00205

(87) International publication number:
WO 97/10129 (20.03.1997 Gazette 1997/13)

(84) Designated Contracting States:
DE ES FR GB IT

(72) Inventors:
• **Ivanov, Valery Filippovich**
**Moscow, 111578 (RU)**
• **Panferov, Fedor Konstantinovich**
**Moscow 109382 (RU)**

(71) Applicants:
• **Ivanov, Valery Filippovich**
**Moscow, 111578 (RU)**
• **Panferov, Fedor Konstantinovich**
**Moscow 109382 (RU)**

(74) Representative:
**Sparing - Röhl - Henseler**
**Patentanwälte**
**Postfach 14 04 43**
**40074 Düsseldorf (DE)**

(54) **METHOD AND DEVICE FOR CONTROLLING A VEHICLE WINDSCREEN CLEANING SYSTEM**

(57) The proposed method involves setting the period of the intermittent action of the windscreen wiper blades or washer by means of a control lever. This is done by determining and recording the period between the two most recent actuations of those units; a longer period of action for, for example, the windscreen wiper blades is set by briefly switching the control lever to "stand-by" mode. Once the predetermined stand-by period has elapsed, the operating period for the windscreen wiper blades is reset on the basis of the two actuations mentioned above; the first of these following the stand-by period consists of one of more complete oscillating movements whose number is limited by switching the operation of the windscreen wiper blades to stand-by mode. In the on-board control unit for the windscreen cleaning system, the buttons for actuating the windscreen cleaner and washer and the buttons for switching the windscreen wiper and washer to stand-by mode are configured in pairs in such a way that they can be pressed simultaneously by the driver with one finger.

FIG. 6

EP 0 850 811 A1

# Description

## Field of invention

The present invention relates to the electronic equipment of vehicles, specifically to the system of vehicle cleaning, and more precisely to methods and devices, designed to control the operation of a vehicle windscreen cleaning.

## Background of the invention

One of the most important characteristics related to the traffic safety of a vehicle windscreen cleaning systems, containing windscreen wiper blades (wipers) and a washer device, is the ease and facility of setting their optimal operating mode. Most of the known inventions (US patent # 4,492,904, cl. 318/444), designed to improve the above characteristics concern mainly the improvements, linked to the method of control of windscreen wiper blades or simply wipers operation, working in the intermittent mode. This is due to the fact that the choice of optimal mode of their work is directly linked to the traffic safety, as high oscillation frequency of wipers worsens the driving conditions because of the mechanical impact on the driver's vision, while low oscillation frequency leads to the increase in windscreen pollution.

Most of known inventions are designed to simplify the methods of switching wipers activation frequency, which is usually predetermided. One of such methods is described in several patents (German patents DE 35 29 004 C1, DE 42 05 268 C1, cl. B60S 1/08), disclosing the device to control the screen-wipers, consisting of a control lever with three fixed positions. With each brief switching of the control lever from one position to the other and backwards the sequential change in the duration of wipers activation interval.

But such method of controlling takes the driver too much time and, besides, it does not provide the possibility to set an optimal mode using the minimum number of control lever reciprocating movements.

Also known are the devices, using the method of setting the optimal interval of wipers movement in conformity with driver's subjective assessment of the overall external conditions and according to the particularities of his vision. One of such devices (U.S. patent # 4,375,610, cl. 318/444) allows the driver to set the duration of the pause between wipers movements by switching them on with a special button after the needed time passed after the most recent movement of screen-wipers, after which a control device registers the value of this interval and ulteriorly switches on periodically the wiper with pauses equal to this time. This device comprises two control unit : three-position mode switch (off-pulse-on) and a button for setting the duration of the pause. The first drawback of this device is the existence of two control units, the second - the difficulty to change the interval, for example to increase it. This is due to the fact that the change of wipers movement interval is made only by resetting this interval by means of snapping the mode switch to the corresponding position and two sequential press on the pause duration button.

To remove the above drawbacks a device was proposed (German claim DE 41 36 724 A1, cl. B 60 S 1/08), which uses one control lever with, at least, two fixed positions ("Working mode ON" and "Interval mode ON") and one non-fixed position "Pause".

The drawback of this device is that the duration of the pause between wipers' travels does not affect the duration of the pause. It deteriorates the quality of wipers' work, as it is known that after a long pause of wiper actuation more time is needed to clean the windscreens, than after their further operations. When there is need for additional cleaning of the windscreens, this device requires to turn on the continuous working mode of the wipers; this, firstly, complicate the use of the wipers, and, secondly, causes the necessity to have a second fixed position of working mode switch.

Another drawback of this device is the discomfort of the driver due to the increase in wiper travel interval. In fact, three options of interval increasing (formula of the invention clauses 6,7,8) are examined in the invention description, the first option comprising the movement of the control lever from the fixed position "Interval mode ON" to the fixed position "Working mode OFF" and then from the fixed position "Working mode OFF" to the fixed position "Interval mode ON", single-shot wiper travel being made during the most recent switch of wipers, which is very uncomfortable for the driver, because the setting of the new value of interval is to be made with a delay equalling this interval. This is due to the fact that a driver takes the decision to increase the interval at the beginning of wipers travel, their next operation period being with an augmented interval. But the proposed method of mode setting does not provide such possibility. The examined drawback also applies to other options of wipers working interval increase.

The common drawback of these and of other known devices is that, because of the particularities of the control units, they are not capable to use the examined method to set an optimal working mode of windscreen washer.

Yet another common drawback of these devices is that they do not provide the possibility to set using the control lever the intermittent-continuous working mode of windscreen wipers, which, in some cases, as it will be shown below, proves to be optimal.

Besides, the known inventions do not resolve the problem of interaction of this optimal mode setting method with the sensors of windscreen pollution, which can be set up on several types of vehicles.

And another drawback of the proposed devices is the lack of interaction between the working modes of windscreen wipers and windscreen washer.

## Summary of the invention.

The purpose of the present invention is to create a new method of windscreen cleaning system, allowing for maximum number of the wiper and the washer working modes, which can be set firstly, by means of only one control lever, and secondly, by using for this a theoretically minimum number of driver's actions and to create a device to implement this method.

The essence of the solution of the set task, according to the invention, is to set a bigger period of wipers action period by their additional switching by turning the control lever for a random time interval to the position corresponding to the stand-by mode of their next actuation, after the set waiting period is elapsed, the generation of wipers working period being renewed by the above-mentioned two actuation's, the first of these actuation's after the elapse of time consists of one or several full oscillating movements, which number is limited by switching the wipers into the stand-by mode.

Besides, using this method it is possible to set a continuous-intermittent wipers working mode by switching then again during a set lapse of time, including the time of the end of their complete oscillation movement, decreasing the number of their complete continuous travels by means of additional switching of wipers during the wipers travel to the stand-by mode of their next actuation.

The advantage of the described method and device for controlling the windscreen cleaning system is, above all, the simplicity to set an optimal working mode of both screen-wipers and washer. In fact, to increase the interval between wipers travels, the driver needs only to perform one action, that is to make at a random moment a brief deflection of the control level.

Another advantage of this method is the possibility of setting with the same control lever the optimal parameters of wipers intermittent-continuous operation mode.

Another particularities and advantages will be clear from the detailed description, as well as from clauses 3-12 of the formula.

## Brief description of drawings

Hereafter the invention is explained by the description of specific, but not limited the invention, embodiments and supporting drawings:

Fig.1 is a panoptic view of the control lever design to control the operation mode of screen-wipers;

Fig.2 is one of the embodiments of control buttons on the steering wheel of a vehicle;

Fig.3 is the block diagram to control the screen-wipers in a vehicle;

Fig.4 is a flow chart of the main algorithm of screen-wipers control in a vehicle;

Fig.5 is a flow chart of the extended algorithm of screen-wipers control in a vehicle;

Fig.6 is a flow chart of the algorithm of additional functions control in screen-wipers operation;

Fig.7 is a flow chart of the algorithm of windscreen washer control in a vehicle;

Fig.8 is a flow chart of the algorithm of cleaning system automatic control

## Preferred embodiments

In the description of the embodiments of windscreen cleaning system being examined, featured on the drawings, specific narrow terminology is used, for the sake of simplicity. But the invention is not limited to the adopted terms and it should be taken into consideration that each such term covers all equivalent elements, operating analogously and used to resolve the same tasks. We are referring now to the specific embodiment of the invention, explained with the drawings.

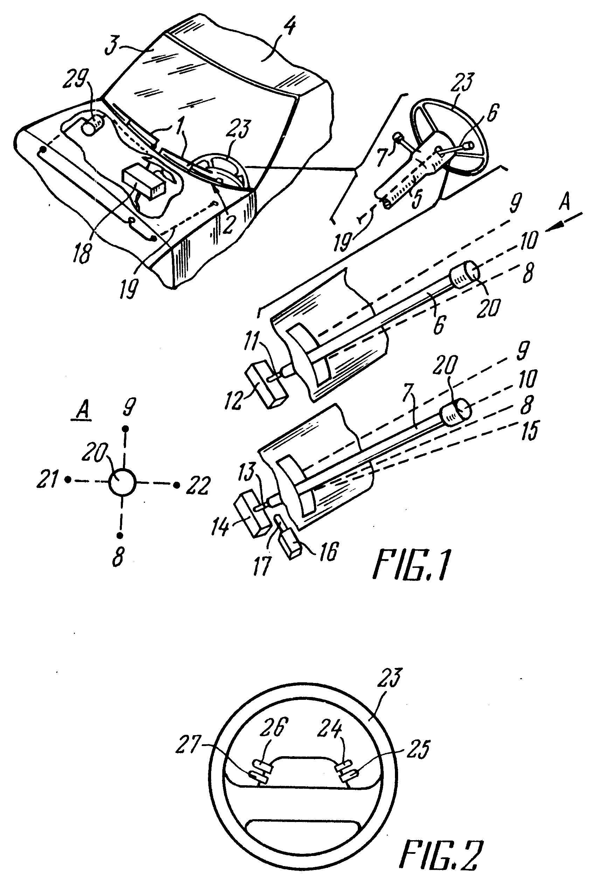

In Fig.1, digit 1 marks screen-wipers and digit 2 - jets of windscreen 3 washing device. Screen-wipers are fixed to the wipers' blades and drawn against windscreen 3 of vehicle 4 with special springs. On steering column 5 control lever 6 is installed, controlling the operation mode of screen-washers 1 and control lever 7, controlling the operation mode of windscreen washing device or washer, marked on the presented drawing with digits 8 and 9 and one fixed medium position, marked with digit 10. Self-reset to medium position 10 of control lever 6,7 is achieved by means of their fixing on movable pin 11 of switch 12 and on movable pin 13 of switch 14, both having two non-fixed and one medium fixed positions of pins 11 and 13. Additional non-fixed positions of levers 6,7 are also possible. The drawing provides for and additional non-fixed position 15 of lever 7, possible because of the presence of microswitch 16 with spring-loaded button 17. Switches 12,14 and 16 are linked to control unit 18 via cable 19. On the free edges of levers 6 and 7 are placed wiper operation mode switches (not shown on the drawing) having handles 20 on their axes. In the presented view, in the direction of flash A, an embodiment of lever 6 is drawn, operating at the same time as lever 7. This is achieved by introducing two additional non-fixed positions 21 and 22, the functions of which are equivalent to the functions of positions 8 and 9 of lever 7.

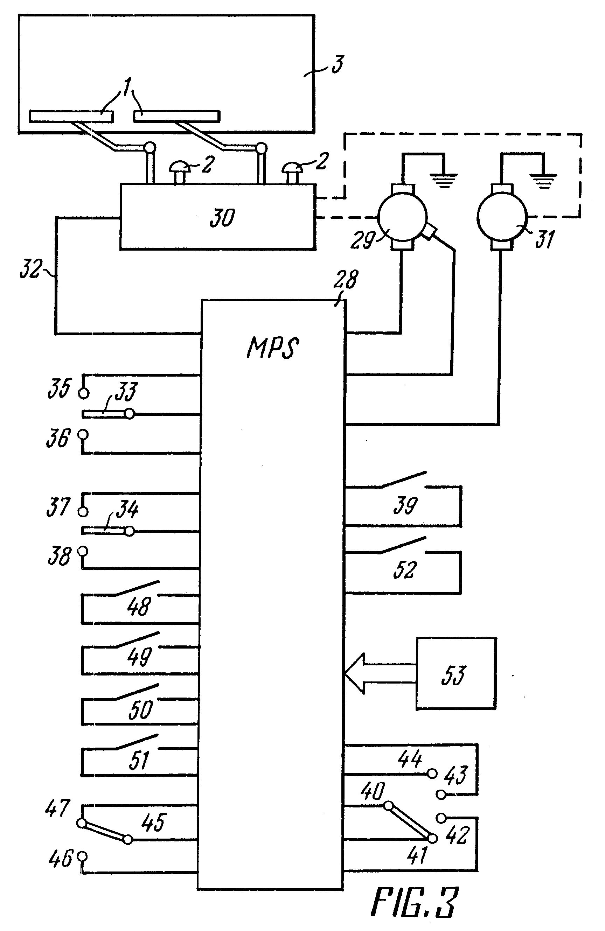

Fig.2 is one of embodiment of control buttons arrangement on steering wheel 23 of vehicle 4. Control buttons are arranged in pairs, screen-wiper actuation button 24 and washer button 25 being placed in a way that enables the driver to push them with one hand. Buttons 26 and 27 of screen-wiper and washer turning-off are placed in the same way.

Fig. 3 is a block diagram of screen-wipers control device in vehicle 4. Control unit 18 includes an electric circuit, containing microprocessor system (MPS) 28, connected via a special interface, included in this system, to electric motor (29), linked via a mechanic drive inside unit 30 with wiper blades and it electric motor 31 linked with washer elements, being inside unit 30. The mechanical linkage between the shaft of electric motor 29 and wiper blades is effectuated by a standard mechanism converting the rotation of motor drive in periodic sweeping of wipers 1. This mechanism includes electric contacts (not shown on the drawing), providing for the wipers return to the initial position after the voltage from MPS ceases to be applied to the electric motor. The linkage of electric contacts inside unit 30 with MPS 28 and electric motor 29 is effectuated by means of conductor 32. The shaft of electric motor 31 and the washer device elements (supplying tank, pulps, valves, tubes) located in unit 30 are also mechanically linked by means of a special mechanism, converting the motor rotation into a liquid supply through jets 2.

Each of main switches 12,14 has, at least, one common contact 33,34 and two contacts 35,36 and 37,38, connected to MPS 28. The contacts of microswitch 16, marked with 39, are also connected to MPS 28. The contacts of operation mode switch, located inside the free end of lever 6, are marked with 40,41,42,43,44. When contacts 40 and 41 are made, the main operation mode of wiper is provided, described in this invention. Contacts of operation mode switch, located inside the free end of lever 7, are marked with 45,46,47. When contacts 45 and 46 are made, the main operation mode of washer is provided, also described in this invention. The pairs of contacts of buttons 24,25,26,27 and of microswitch 16 are marked respectively with 48,49,50,51,52. By connecting common contact 40 to contacts 42,43,44 a fixed time period of screen-wipers intermittent mode is chosen. By connecting common contact 45 to contact 47 the washer operation mode, set according to the method, described in this invention, is switched out. The number 53 marks the windscreen 3 pollution level data generating unit. The presence of such unit is sometimes provided in some vehicles. As a rule, unit 53 contains one or several windscreen status sensors and a circuit for previous processing of signals, coming from these sensors. Any other functions, providing for additional driver's comfort (the choice of operation mode of windscreen washer, the choice of linear velocity of wipers travel on the surface of a windscreen etc.) can be assigned to one or several switches. For instance, by selecting the actuation mode of washer devices, it is possible to provide the supply of cleaning liquid onto the windscreen several seconds before the actuation of wipers.

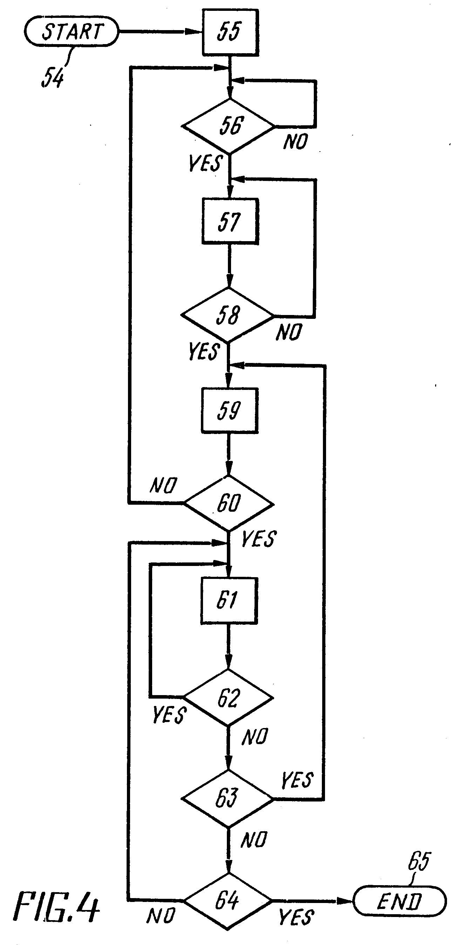

Fig.4 is a flow chart of the main screen-wipers control algorithm in a vehicle. We shall now explain all numeric conventions, not marked on Fig.4. Number 55 marks the action of Making contacts 40 and 41, number 56 marks the condition Was lever 6 switched to position 8?, number 57 marks the action of Continuous work of wipers, number 58 marks the condition Was lever 6 switched to position 9?, number 59 marks the action of Screen-wipers action stoppage after their return to the initial position, number 60 marks the condition Was lever 6 switched to position 8 after the time interval $T<T0$?, number 61 marks the action of Single switch and intermittent single action of wipers with actuation period $t0+T(i)$, number 62 marks the condition Was the i-th switch of lever 6 to position 8 made?, number 63 marks the condition "Was lever 6 switched to position 9?, number 64 marks the condition Has the overall switch-out took place?

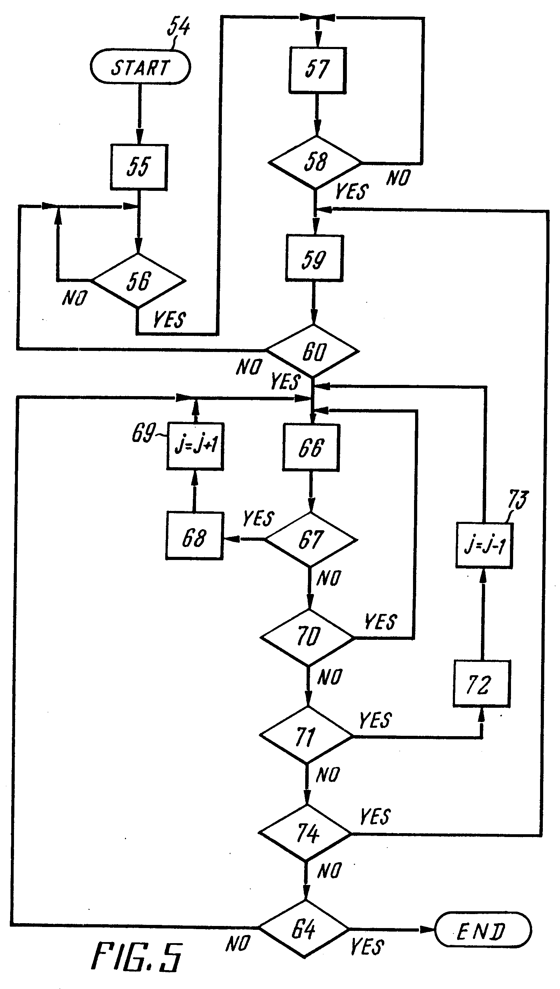

Fig.5 is a flow-chart of an extended algorithm of wipers control in a vehicle. We shall now explain the numeric conventions, not marked on Fig.5 Number 66 marks the action of Actuation and intermittent action of screen-wipers with actuation period $jt0+T(i)$, number 67 marks the condition Was lever 6 switched to position 8 after a period of time t ($t0-a <t<t0+a$) after the beginning of the most recent travel of screen-wipers?, number 68 marks the action Single actuation of screen-wipers, number 70 marks the condition Was the i-th switch of lever 6 to position 8 made?, number 71 marks the condition Was lever 6 switched to position 9 during the j-th travel of screen-wipers?, number 72 marks the condition Return of screen wipers after the j-th travel to the initial position, number 74 marks the condition Was lever 6 switched to position 9?.

Fig. 6 is a flow chart of the algorithm, having additional functions of screen-wipers operation. We shall now explain the numeric conventions, not marked on Fig.6. Number 75 marks the action of Screen-wipers action in intermittent mode, number 76 marks the condition Was lever 6 switched two times to position 8 or was it held in this position?, number 77 marks the action Operation of screen-wipers in a continuous mode, number 78 marks the condition Was lever 6 switched to position 9?.

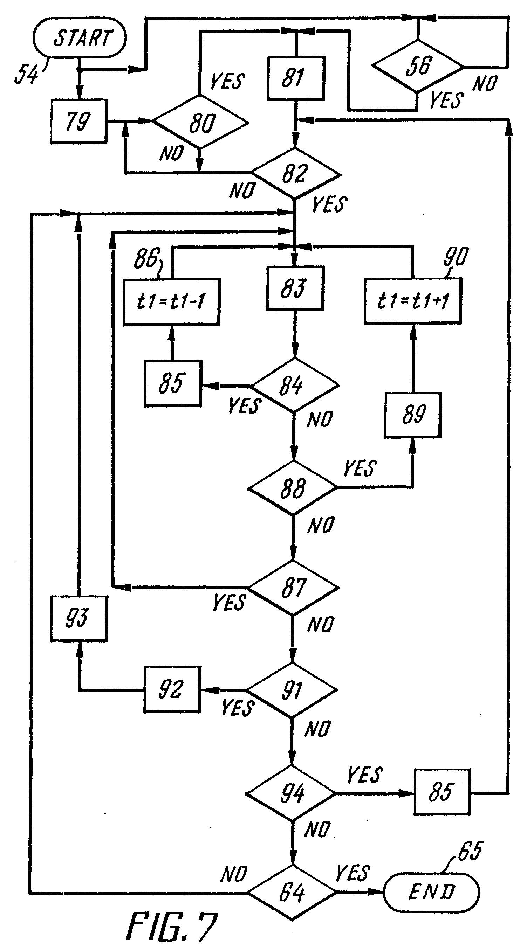

Fig.7 is a flow chart of the algorithm of windscreen washer operation. We shall now explain the numeric conventions, not marked on Fig.7. Number 79 marks the action of Making of contacts 45 and 46, number 80 marks the condition Was lever 7 switched to position 8 and briefly held in position 8?, number 81 marks the action of Washer actuation, number 82 marks the condition was lever 7 switched to position 8 and briefly held in position 8 after the period $T<T1$?, number 83 marks the action of Periodic actuation of washer with the period equalling $t(j)+T(i)$, number 84 marks the condition Was lever 7 briefly switched to position 9 during the operation of the washer?, the number 85 marks the action of Stop of washer operation, number 87 marks the condition Was the i-th brief switch of lever 7 to position 8 made?, number 88 marks the condition Was one or several switches of lever 7 to position 8 and holding of lever 7 made immediately after the stop of washer operation? number 89 marks the action of Washer actuation, number 91 marks the condition Was the i-th switch and a brief holding of lever 7 in position 8 made?, number 92 marks the action of Washer actuation, number 93 marks the action of Memorization of values t(j) and T(i), number 94 marks the action Was lever 7 switched to position 9.

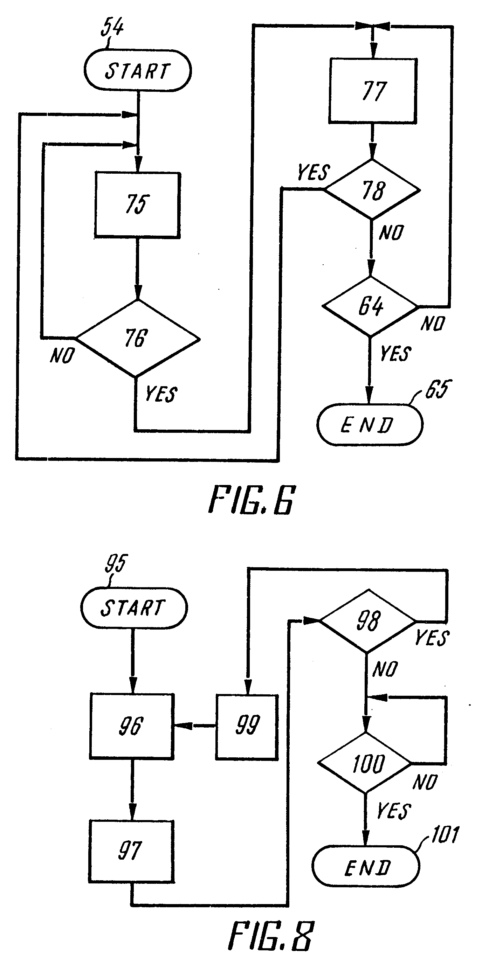

Fig.8 is a flow chart of the algorithm of cleaning system automatic operation mode. We shall now explain the numeric conventions, not marked on Fig.8. Number 96 marks the action of Request and Accumulation of data, coming from unit 53, number 97 marks the action of Selection of the most probable cleaning system operation mode when the data coming from unit 53 is changed, number 98 marks the condition Was the manual correction of operation mode made?, number 99 marks the action of Increase in data volume, number 100 marks the condition Was the automatic mode switched off?.

We shall consider first the operation of a device having the minimum number of design features, necessary for the functioning of this invention. It should be noted that such embodiment of this invention can be in some cases the most preferable one, as the minimum number of possible positions of lever 6 (three positions 8,9,10) provides the driver with most comfort when selecting screen-wipers operation mode. The use of the three above-mentioned positions does not exclude the availability of other positions, including fixed ones. However, the use of three positions 8,9 and 10 provides the driver with the possibility to choose the optimal mode of wipers operation mode, without wasting his time on additional movements because of the presence of additional control lever positions. The screen-wipers operate in conformity with one of the algorithms shown on Fig.4, Fig.5 and Fig.6. It should be also noted that all actions linked with control levers can be dublicated by corresponding buttons, the push of buttons 24 and 25 corresponding to the switch of levers 6 and 7 to position 8 and the push of buttons 26 and 27 corresponds to the switch of control levers to position 9.

The operation of the device begins after voltage is applied and all elements of control unit 18 are set to the initial position (action 54) and after contacts 40 and 41 are made (action 55) by means of turning handle 20. The performance of these and other actions, linked chiefly with the actuation of electric motor 29 and other external elements, is conditioned by the fact that after lever 6 reaches one of the possible positions, for example, position 8 or 9, contacts 33,36 or 33,35 of switch 12 are made. After the making of corresponding contacts, MPS 28 performs the controls through the internal interface using motor 29 according to the programs recorded in its read-only memory. It can be noted that the embodiment of lever 6 position with contactless pickups. When there is need to actuate the screen-wipers, a brief switch of control lever 6 to position 8 is made by pushing it downwards. When the driver releases the lever, it automatically returns to middle position 10. When control lever reaches position 8 ("YES" in condition 56), the wipers are switched into continuous operation mode (action 57), that is they begin to perform oscillating movements, until a brief switch of control lever to position 9 is made ("YES" in condition 58). When this position is reached, voltage from MPS 28 ceases to be applied to electric motor 29. However, because of made contacts inside unit 30, the electric motor remains turned on until the wipers return to their initial position (action 59). The further operation of the device depends on the moment of the next push on control lever 6. If time T(i) (i is the ordinal number of wipers actuation after the end of action 59) elapsed after the end of most recent travel of wipers is less than T0 value, preset when programming MPS 28, the switch of lever 6 to position 8 in time T(1) ("YES" in condition 60)causes a single complete travel of screen-wipers 1 and their further single intermittent operation with actuation period equalling t0+T(1), where t0 is the duration of one complete travel (single actuation) of wipers (action 61). Otherwise, ("NO" in condition 60) the device goes to the stand-by mode till the next switch of control lever to position 8, which will be followed by action 57, causing the continuous operation of electric unit 29. The introduction of time T0 considerably increases the efficiency of the described device operation, as after a long movement of vehicle in the rain and after the first actuation of windscreen cleaning system, the wipers, are, as a rule, actuated for quite a long period of time, during which the driver usually uses the washer and the screen-wipers make several travels on the surface of the windscreen. This is due to the fact that for relatively short period of time, the windscreen of a vehicle moving in the adverse driving conditions, becomes so dirty that the single travel of the wipers is not sufficient.

When there is need to decrease the period of screen-wipers 1, because of high pollution of windscreen, control lever 6 is switched for the second time (i=2) in position 8 ("YES" in condition 62) resulting in the period of single intermittent operation of screen-wipers 1 equalling t0+T(2). With each new actuation of wipers, the period of their single operation will be less then the previous period, i.e. t0+T(i+1) < t0+T(i) . It is important to note that during the actuation of the wipers, the driver does not feel any discomfort linked with the delay in their actuation, because the command to actuate the elector motor is made in the very moment of contacts 33 and 36 making. This decreases the delay of actuation in comparison with the above-mentioned device, described in claim DE # 41 36 724. The value of actuation delay decrease is determined by the time of opening of contacts 33 and 36 depending on such parameters as the length of control lever travel, the space between two contacts, the width of control lever position sensor hysteresis, etc., can be in the order of one second. When there is need to increase the interval t0+T(i), control lever 6 is briefly switched at a random moment to position 9 ("YES" in condition 63), and when there is need to actuate the wipers - to position 8 ("YES" in condition 60). Naturally, when control lever is switched to position 8 after time T0 has elapsed ("NO" in condition 60) the wipers operate continuously, which is shown on the drawing as action 57. When overall switching-off occurs ("YES" in condition 64), for example, when voltage ceases to be applied, the device goes to the state where it was before instruction 54 was made.

Fig.5 is an extended variant of the device operation mode, linked with the generation by the control lever of wipers intermittent-continuous operation mode. Such operation mode provides a great comfort, when moving in the rain or after the rain, when lots of impurities raised by passing vehicles deposit on the windscreen, preventing it from being cleaned with one or several complete travels of wipers. This invention provides the drives with the possibility to switch using one control lever the intermittent-continuous mode, but also to select the optimal parameters of its operation, proceeding only from the windscreen status satisfying in the specific moment the driver. If windscreen 3 is not enough cleaned by screen-wipers 1 after j number of continuous travels (action 66) the driver can, after short, but long enough to assess the pollution level of windscreen period of time a, switch control lever to position 8 ("YES" in condition 67). In the moment $t$ ($t_0-a < t < t_0+a$) of switching control lever to position 8 (after the beginning of the most recent travel) a single actuation of wipers 1 (action 68) is made and the calculation and memorization in MPS 28 of new number j of continuous travels by adding one to the previous j number (action 69). The screen-wipers will then operate in intermittent-continuous mode with the new number of continuous travels equalling j and with intermittent operation mode equalling $T(i) + jt$. When there is need to reduce time $T(i)$ control lever is switched to position 8 ("YES" in condition 70). If before j travel of screen-wipers the windscreen status satisfies the driver, during j travel he can switch control lever 6 to position 9 ("YES" in condition 71). Then after the end of j travel (action 72) and computation of new j value by subtracting one from the old j value (action 73) the intermittent-continuous operation mode will function (action 66) with the new setting of the number of travels, included in its continuous component. In some cases to decrease the number of travels, switch of control lever to position 9 ("YES" in condition 47) is admissible during a short time interval after the completion of j-th travel. If control lever is switched to position 9 at any other moment ("YES" in condition 74), the screen-wiper is switched to stand-by mode and, after time T0 has elapsed ("NO" in condition 60), returns to the initial position.

Fig.6 is a flow-chart of screen-wiper operation mode, containing some additional functions, linked with the actuation of known modes. It proves to be useful if control lever 6 has only one fixed position 10. In this case the actuation of, for example, continuous operation mode can be made at any time by means of two brief switches of control lever to position 8 ("YES" in condition 76), the time between these two switches not exceeding the preset value. Another method of continuous mode actuation can be the control lever holding in position 8. As a sudden actuation of wipers continuous operation (action 77) results, as a rule, from a sudden, not steady, deterioration of visibility, due to a passed vehicle whose movement can pollute vehicle 3 windscreen with a considerable amount of water and dirt, all parameters, preceding the actuation of continuous mode, of intermittent and intermittent-continuous mode are retained (action 75) when switching back control lever 6 to position 9 of continuous mode actuation ("YES" in condition 78). This is made by means of memorization of the most recent or current time period of wipers operation in the memory of control unit 18. By equipping control lever 6 with a device, such as electromagnet, holding it in one or several non-fixed positions, it is possible, in most cases, to give up some positions of the control lever, the functions of which can be assigned to those non-fixed positions in which the control lever stay in held status. The switch of the control lever to the held status in the non-fixed position can be provided by the same actions which were performed when actuating the wipers continuous operation mode ("YES" in condition 76). It should be noted that other additional service actuation's are possible, which can be rested on control lever 6. For example, switching the control lever to position 8, when the wipers are moving on the windcreen surface, can increase the velocity of their movement, while its switching to position 9 can decrease it. Additional microswitches, installed at the end of the control lever travel, can also provide greater comfort of its use. For example, a microswitch linked with MPS 28 can perform various service functions. We will enumerate only some of them, actualized after the control lever, moved to the extreme position, acted on button 17 of microswitch 16, if the latter is installed at the end of lever 6 travel : the overall cutting-off of the device, the actuation of screen-wipers with an increased velocity of movement, the switching of control unit 18 in the wipers continuous operation mode with a preset period of their work, actuation of washer 00, actuation of the means of lever holding in a non-fixed position, actuation of wipers continuous operation simultaneously with the supply of cleaning liquid on the windscreen, etc. If there is an additional microswitch at the other end of lever 6, the number of additional functions increases.

Fig.7 is a flow chart of algorithm of windscreen washer system (hereafter washer) operation, which principle of action is analogous to the described one. The device starts to operate after voltage is applied and after the setting of all elements of control unit 18 to the initial position (action 54) and after the making of contacts 45 and 46 (action 79) by turning handle 21. The first switch and holding of control lever 7 ("YES" in condition 80) in position 8, result in turning on of electric motor 31 and in the supply of cleaning liquid onto the windscreen through jet 2 of the washer (action 81). The quantity of the liquid supplied through the above jets must be in proportion with t1 of driver's control lever holding in position 8, as during such holding electric motor 31 stays turned on. When the control lever returns to position 10, the cleaning liquid ceases to be supplied and the system goes to the stand-by mode, waiting for the next switch of control lever to position 8, after the performance of this switch before time T1 has elapsed ("YES" in position 82), the supply of cleaning system is renewed (action 83) and ulteriorly it is supplied in the windscreen periodically, with period equalling t1+T(i), where t1 is the time of the most recent (except the first after time T1 has elapsed) holding of lever 7 to position 8, T(i) is the time between the most recent actuation and switching-out of the washer, i - is the running number of washer actuation after the completion of action 81. It should be noted that time t1 can consist of small intervals when the washer operates. It enables the driver to spend liquid with greater precision, that is more economically. Values t1 and T(i) are changed by switching control lever 7 to position 8 and 9 in the corresponding times. Value t1 is decreased by switching control lever to position 9 ("YES" in position 84) during the washer operation, after which the liquid supply stops (action 85), while MPS 28 computes a new value t1 (action 86). Value t1 is increased by additional actuation (action 89) of the washer by switching and temporally holding control lever 7 to position 8 ("YES" in condition 88), with time interval between the start of the above switching and the end of time t1 not exceeding the set value. If the lever was switched to position 8 during the operation of the washer, time t1 will elapse and at the moment of lever return to position 10. Whichever of two methods was used, MPS 28 calculates the new value of t1, which is shown on the chart as action 90. When there is need to decrease T(i) value control lever 7 is switched to position 8 ("YES" in condition 91), which continues through the holding of control lever in this position, while MPS 28 changes parameters t1 and T(i) (action 93), resulting in periodic actuation of the washer, shown as action 83, being made with their new values. It should be noted that when control lever when control lever is briefly (without holding) switched to position 8 ("YES" in condition 87), only T(i) value, linked with the moment of washer actuation, changes, value t1 remaining unchanged in comparison with the value, which was valid during the most recent actuation of the washer. When the control lever is switched to position 9 ("YES" in condition 94), before the next actuation of the washer, the periodic operation stops (action 85), and the device itself switches to the stand-by mode, waiting for its actuation ("YES" in condition 82), which enables to increase the interval of washer actuation.

In the conclusion we shall consider the possibility of using this invention to improve the performance of automated cleaning systems, which, despite a great number of inventions in this field, were not widely implemented in practice. This is because optimal frequency of cleaning means actuation is selected the driver individually, as it often linked with subjective driving conditions (driver's acuity of vision, vehicle's velocity, traffic density, etc.). The method of improving the functionality of automatic system is made as follows (Fig.8). After the switching of the automated mode of systems operation (action 95) the accumulation of data (action 96), designed to be processed in MPS 28 and coming, firstly, from one or several windscreen pollution (status) sensors installed in data generating unit 53, and, secondly, from the cleaning system operation mode, turned on by the driver using the device considered in this invention. The volume of data, due to be accumulated, can be preset by the driver himself, but another option, when such data volume is preset by MPS 28 itself, is also possible. It should be noted that part of the data coming to the input of MPS 28 can contain information on other parameters, not linked directly with windscreen pollution. This is due to the fact that, as it was noted above, the optimal mode of system functioning is also influenced by subjective factors, linked with the moving conditions of the vehicle. After the accumulation of the preset data volume, new information coming from unit 53 and from other sensors (if they are available) is used in the computation of the parameters of new mode of cleaning system operation (action 97). The program algorithm, designed to compute new mode can be based on the known principles, used in expert systems. In regards to our case, the essence of these principles consists in that on the basis of the rules of assertion deduction, which MPS 28 develops during its learning, new cleaning system operation mode is determined, and if this mode does not coincide ("YES" in condition 98) within the set error with real mode, programmed by the driver using this invention, MPS identifies new rules of assertion deduction or increases the volume of accumulated data (action 99). When the mode of automatic operation (action 101) is turned off ("YES" in condition 100), the system switches to the operation mode, considered in this invention. The proposed method of interaction between the device, described in this invention and automated systems of windscreen cleaning means, increases considerably the efficiency of their operation, as during use of a vehicle, the automatic system is "adjusted" for a specific driver.

The proposed method has several advantages. In particular, it is especially suitable for the use with those vehicles, which can be used both in adverse weather conditions and in intensive traffic. This is due to the fact that the actuation and the setting of the parameters even of the complex operation mode of the wiper (continuous-intermittent mode) require from the driver the minimum number of interactions with the control lever or buttons located on the steering wheel of the vehicle. The device provides for the possibility of changing at any time the operation mode of the screen wiper and the washer.

Another advantage of the use of the control lever with one fixed and, at least, two non-fixed positions is such simplicity of actuation interval increasing of, for example, screen-wipers, which is not provided by any other existing inventions. In fact, the driver must perform in this case only one action, i.e. to briefly deflect at a random time the control lever to the stand-by position for the next actuation.

An additional advantage of this invention is the possibility to use instead of the control lever (or along with the control lever) buttons with autoreturn to the initial position, which can be located in the plane of the steering wheel.

Applicability

This invention can be used in any type of vehicles equipped with screen-wipers. This invention is particularly efficient when used with vehicles moving in adverse weather and traffic conditions. This is due to the fact that the selection of the optimal screen-wipers operation mode, also including continuous-intermittent mode, can be made by the driver, firstly, using one lever with a minimum number of positions, and secondly, adequately to weather conditions where the specific vehicle is moving in. The manufacturing of the screen-wipers control system can be undertaken, for example, by car-making companies.

**Claims**

1. The method of windscreen (3) cleaning system control, by means of screen-wipers (1) and a washer, consisting in setting, using control lever (6) a value of the interval of screen-wipers (1) intermittent mode by determining and recording the period between the two most recent actuation's, each of which consists of one complete oscillating movement, characterized in setting a longer screen-wipers operation period by briefly switching at a random period of time the control lever to position (9), corresponding to the stand-by period ("YES" in condition 63); after the set T0 time has elapsed, the value of period of screen-wipers (1) operation mode is regenerated by the above two switches, the first of these switches ("YES" in condition 56), after the stand-by period T0 has elapsed, consisting (57) of one or several oscillating movements whose number is limited ("YES" in condition 58) by operation of the screen-wipers to stand-by mode ("YES" in condition 58).

2. The method of windscreen cleaning system control of claim 1, characterized in the actuation (81) of the washer during the first actuation of screen-wipers after the preset time T0, during which the wipers were in initial position, has elapsed, the washer being switched out by switching ("YES" in condition 58) the screen-wipers operation to stand-by mode.

3. The method of windscreen cleaning system control of clauses 1,2, characterized in setting the continuous-intermittent operation mode (66) of screen-wipers by switching them additionally ("YES" in condition 67) during a set time interval, including the time of the end of their complete oscillating movement, decreasing ("YES" in condition 71) the number of their complete continuous travels by switching, during the travel of screen-wipers, control lever (6) to position (9) corresponding to the setting of their stand-by mode.

4. The method of windscreen cleaning system control of clauses 1-3, characterized in setting the continuous operation mode (77) of screen wipers by double deflecting ("YES" in condition 76) of control lever to position, corresponding to the mode of their single actuation, the time interval between these deflections of the control lever not exceeding the preset value.

5. The method of windscreen cleaning system control of clauses 1-3, characterized in the setting of continuous screen-wipers operation mode by means of forced holding ("YES" in condition 76) of control lever in the position corresponding to the mode of a single actuation of the wipers, the duration of holding must not be less then the set value.

6. The method of windscreen cleaning system control of clauses 1-5, characterized in the memorization of the value of the current period of screen-wipers operation after their switch to the continuous operation mode.

7. The method of windscreen cleaning system control of clauses 1-6, characterized in the setting by control lever (7) of a value of the period of washer operation by means of determination and memorization of the time between those two most recent actuation's, the time interval between which does not exceed the set value T1, the time of washer continuous operation during each of its periodical actuation equalling to the time of its continuous operation, preset by means of the control lever during the above most recent actuation (92).

8. The method of windscreen cleaning system control of clause 7, characterized in the memorization of the washer continuous operation time when the value of washer intermittent operation period is determined by briefly deflecting (87) the control lever.

9. The method of windscreen cleaning system control of clauses 1-7, characterized in the memorization (96), for the set number of cleaning system modes, of windscreen pollution sensors (53) indications, in the determination (97) of new cleaning mode parameters when the sensors indications change or and when this mode coincides within the admissive error with the parameters of the real mode, set be the driver, in sending of special signal or switching in automatic cleaning system operation mode.

10. The method of windscreen cleaning system control of clause 8, characterized in switching-out of the automatic cleaning system operation mode and in increasing (92) the above set number of modes of its operation during the first switch ("YES" in condition 98) of the control lever to one of the non-fixed positions.

11. The device of windscreen cleaning system control, containing control lever (6), having fixed position (10) and linked with control unit, characterized in control lever (6) having, at least, two non-fixed positions (8) and (9), with control lever autoreturning from these positions to the initial position (10).

12. The device of windscreen cleaning system control of claim 11, characterized in having buttons (24), (25), (26), (27) with autoreturn to the initial position, functioning as control levers (6), (7) and installed inside steering wheel (23) of the vehicle.

13. The device of windscreen cleaning system control of claim 11, characterized buttons (24), (25) of screen-wiper and washer actuation and buttons (26), (27) for screen-wiper and washer switching to stand-by mode are configured in pairs in such a way that they can be pressed simultaneously by the driver with one finger.

FIG.1

FIG.2

FIG.3

FIG.4

FIG.5

FIG. 7

FIG.6

FIG.8

## INTERNATIONAL SEARCH REPORT

International application No.

PCT/RU 95/00205

### A. CLASSIFICATION OF SUBJECT MATTER

IPC6: B60S 1/00

According to International Patent Classification (IPC) or to both national classification and IPC

### B. FIELDS SEARCHED

Minimum documentation searched (classification system followed by classification symbols)

IPC6: B60S 1/00,1/06,1/08,1/62, G01W 1/14

Documentation searched other than minimum documentation to the extent that such documents are included in the fields searched

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | DE, Al, 4000164 (SATTLECKER, ARMIN),<br>11 July 1991 (11.07.91) | 1-10,11-13 |
| A | DE, Cl, 3926175 (MERCEDES-BENZ AKTIENGESELLSCHAFT),<br>13 September 1990 (13.09.90) | 1-10,11-13 |
| A | US, A, 5140234 (VDO ADOLF SCHINDLING AG),<br>18 August 1992 (18.08.92) | 1-10,11-13 |
| A | US, A, 5157312 (VDO ADOLF SCHINDLING AG),<br>20 October 1992 (20.10.92 | 1-10,11-13 |
| A | DE, Al, 4000736 (VDO ADOLF SCHINDLING AG),<br>18 July 1991 (18.07.91) | 1-10,11-13 |

☐ Further documents are listed in the continuation of Box C.  ☐ See patent family annex.

| | |
|---|---|
| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 10 April 1996 (10.04.96) | 23 April 1996 (23.04.96) |

| Name and mailing address of the ISA/ | Authorized officer |
|---|---|
| RU | |
| Facsimile No. | Telephone No. |

Form PCT/ISA/210 (second sheet) (July 1992)